Europäisches Patentamt

(19) European Patent Office

Office européen des brevets

(11) Veröffentlichungsnummer: **0 092 661**

**A1**

(12) **EUROPÄISCHE PATENTANMELDUNG**

(21) Anmeldenummer: **83101918.7**

(22) Anmeldetag: **26.02.83**

(51) Int. Cl.³: **F 16 B 13/06**

(30) Priorität: **20.04.82 DE 3214440**

(43) Veröffentlichungstag der Anmeldung:
**02.11.83 Patentblatt 83/44**

(84) Benannte Vertragsstaaten:
**AT BE CH FR GB IT LI NL**

(71) Anmelder: **artur fischer forschung**
**Weinhalde 14 - 18**
**D-7244 Waldachtal 3 (Tumlingen)(DE)**

(72) Erfinder: **Fischer, Artur, Dr. h.c.**
**Weinhalde 34**
**D-7244 Waldachtal 3/Tumlingen(DE)**

(54) Spreizdübel zur Verankerung in porösen Baustoffen.

(57) Die Erfindung betrifft einen Spreizdübel zur Verankerung in porösen Baustoffen, insbesondere in Gasbeton und Hohlkammersteinen und besteht aus einer geschlitzten Spreizhülse (1) und einem einen Spreizkonus aufweisenden Spreizkörper (3), der mittels einer Befestigungsschraube in axialer Richtung bewegbar ist. Zur Erzielung einer verstärkten Aufspreizung ist zwischen dem Spreizkörper und dem vorderen Ende der Spreizhülse wenigstens ein hülsenförmiges, einen Spreizkonus aufweisendes Spreizelement (2) angeordnet, das von seinem vorderen Ende ausgehend bis über einen Teil seiner Länge geschlitzt ist.

EP 0 092 661 A1

./...

Fig.1

EP 1459

<u>Spreizdübel zur Verankerung in porösen Baustoffen</u>

Die Erfindung betrifft einen Spreizdübel zur Verankerung in porösen Baustoffen, insbesondere in Gasbeton und Hohlkammersteinen, bestehend aus einer geschlitzten Spreizhülse und einem einen Spreizkonus aufweisenden Spreizkörper, der mittels einer Befestigungsschraube in axialer Richtung bewegbar ist.

Spreizdübel der oben genannten Art eignen sich insbesondere für harte Vollbaustoffe, in denen zur Erzielung einer starken Verpressung nur eine geringe Aufspreizung erforderlich ist. Dieselben Elemente werden zwar auch in porösen Baustoffen, wie Gasbeton und Hohlkammersteinen eingesetzt, allerdings lassen sich wegen der geringen Aufspreizfähigkeit der bekannten Spreizdübel, die maximal der doppelten Wandungsdicke der Spreizhülse entspricht, nur relativ geringe Haltewerte erzielen.

Da die Wandungsdicke der Spreizhülse die Aufspreizfähigkeit bestimmt, weisen spezielle Spreizdübel für poröse Baustoffe in der Regel einen sehr großen Außendurchmesser auf. Außer erheblichen Montagenachteilen und hohem, nicht nutzbarem Werkstoffanteil der Spreizhülse lassen sich solche Spreizdübel nicht mehr in Durchsteckmontage verwenden, bei der das Bohrloch im zu befestigenden Bauteil und im Mauerwerk einen gleichen Durchmesser aufweisen, und das Befestigungselement ohne Fortnahme des zu befestigenden Bauteiles durch dieses hindurch in das Bohrloch im Mauerwerk eingesetzt wird. Sehr häufig weisen nämlich die zu befestigenden Bauteile bereits Bohrungen auf bzw. deren Außenmaße lassen derart große Durchgangsbohrungen nicht zu.

Der Erfindung liegt daher die Aufgabe zugrunde, zur Verankerung in porösen Baustoffen einen Spreizdübel zu schaffen, der durch verstärkte Aufspreizung bei nicht überdimensionierten Durchmesserverhältnissen hohe Haltewerte zuläßt.

EP 1459

Erfindungsgemäß wird dies dadurch erreicht, daß zwischen dem Spreizkörper und dem vorderen Ende der Spreizhülse wenigstens ein hülsenförmiges, einen Spreizkonus aufweisendes Spreizelement angeordnet ist,
das von seinem vorderen Ende ausgehend bis über einen Teil seiner Länge geschlitzt ist.

Durch wenigstens ein zusätzliches Spreizelement wird zumindest um die
doppelte Wandungsstärke dieses Spreizelementes die Aufspreizfähigkeit
des Dübels gesteigert ohne daß der Durchmesser der Spreizhülse vergrössert werden muß. Außer einem etwas tiefer gebohrten Bohrloch sind die
Montagebedingungen dieselben wie bei herkömmlichen, für Vollbaustoffe
abgestimmten Spreizdübel. Bei einem Einsatz des erfindungsgemäßen Spreizdübels in Hohlkammersteinen resultiert der hohe Haltewert sowohl aus der
Pressung der Spreizsegmente im Bereich der Stege, als auch aus der großvolumigen Aufweitung und Wulstbildung der Spreizsegmente hinter den Stegen der Hohlkammersteine.

In einer weiteren Ausgestaltung der Erfindung kann der Steigungswinkel
des Spreizkonuses des Spreizelementes geringer sein als der Steigungswinkel des Spreizkonuses des Spreizkörpers. Der damit verbundene höhere
Einzugswiderstand für den Spreizkörper sorgt dafür, daß zunächst das
Spreizelement in die Spreizhülse eindringt und diese vorspreizt. Erst
wenn durch entsprechenden Spreizdruck der Widerstand erheblich ansteigt,
dringt dann der Spreizkörper in die Innenbohrung des Spreizelementes
ein und führt damit durch Aufweitung des Spreizelementes zu einer weiteren Aufspreizung der Spreizhülse.

Schließlich kann in einer weiteren Ergänzung der Erfindung die Spreizhülse um 90 Grad zu seiner Schlitzebene versetzt zwei sich gegenüberliegende längsverlaufende Innennuten aufweisen, in die am Außenumfang
des Spreizelementes angeordnete Nasen eingreifen. Durch diese Gestaltung ergibt sich eine Drehsicherung zwischen Spreizelement und Spreizhülse, die durch die Versetzung um 90 Grad zur Schlitzebene auch bei
sehr starker Aufspreizung in Eingriff bleibt.

EP 1459

In gleicher Weise eine Drehsicherung zwischen Spreizkörper und Spreizelement zu schaffen, wird durch die weitere Ergänzung erreicht, daß das Spreizelement um 90 Grad zu seiner Schlitzebene versetzt zwei sich gegenüberliegende Ausnehmungen aufweist, in die am Außenumfang des Spreizkörpers angeordnete Vorsprünge eingreifen. Bei einer Begrenzung der Ausnehmungen zur Spreizhülse hin ergibt sich eine erst bei größerem Widerstand überwindbare Einzugssperre, so daß in jedem Fall sichergestellt werden kann, daß zunächst das Spreizelement in die Spreizhülse eingezogen und erst danach bei entsprechend hohem Widerstand der Spreizkörper zusätzlich in das Spreizelement eindringt.

Schließlich kann in einer weiteren Ergänzung der Erfindung die durch die Schlitze getrennten Spreizschenkel der Spreizhülse und / oder des Spreizelementes durch eine Anbindung zusammengehalten sein. Diese Anbindungen sollen ein zu frühes Aufspreizen verhindern. Ferner können durch eine am Außenumfang des Spreizelementes bzw. des Spreizkörpers angeordneten Nocke diese Teile durch Einrasten in dem Schlitz mit der Spreizhülse bzw. mit dem Spreizelement verbunden werden.

In der Zeichnung ist ein Ausführungsbeispiel der Erfindung dargestellt. Es zeigen:

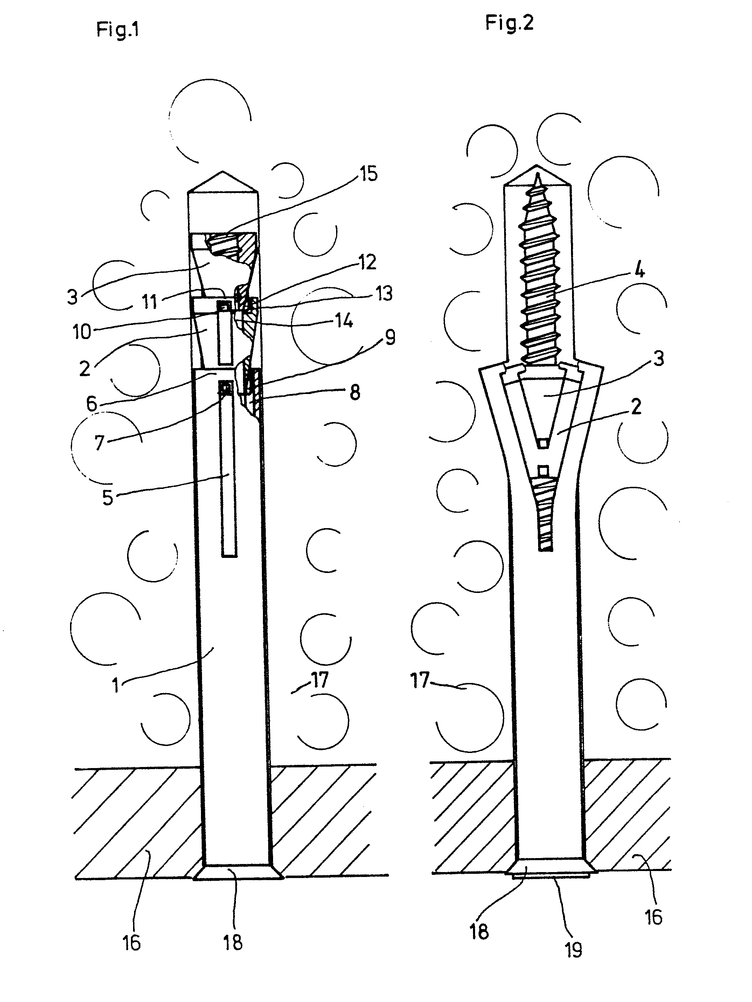

Figur 1    den erfindungsgemäßen Spreizdübel in ungespreiztem Zustand

Figur 2    den Spreizdübel nach Figur 1 in gespreiztem Zustand.

Der Spreizdübel besteht aus einer Spreizhülse 1, einem mit einem Spreizkonus versehenen Spreizelement 2 und einem ebenfalls mit einem Spreizkonus versehenen Spreizkörper 3, der mittels einer Befestigungsschraube 4 in axialer Richtung bewegbar ist. Die durch einen vom vorderen Ende ausgehenden Schlitz 5 gebildeten Spreizschenkel der Spreizhülse 1 sind durch eine Anbindung 6 gegen vorzeitiges Aufspreizen zusammengehalten. Durch Einrasten einer am Außenumfang des Spreizelementes 2 angeordneten Nocke 7 in diesen Schlitz 5 ist das Spreizelement 2 auch ohne die

EP 1459

in den Spreizkörper 3 eingedrehte Befestigungsschraube 4 mit der Spreizhülse 1 unverlierbar verbunden. Gleichzeitig greifen in die um 90 Grad zur Schlitzebene der Spreizhülse 1 versetzt angeordneten Innennuten 8 zwei ebenfalls am Außenumfang des Spreizelementes 2 angeordneten Nasen 9 ein, die einerseits zur Drehsicherung zwischen Spreizelement 2 und Spreizhülse 1 dienen und andererseits sicherstellen, daß die Einschlitzung des Spreizelementes 2 in gleicher Ebene mit der Einschlitzung der Spreizhülse 1 liegt. Damit ergeben sich für das Spreizelement 2 und für die Spreizhülse 1 gleiche Aufspreizrichtungen.

Die Halterung des Spreizkörpers 3 im Spreizelement 2 erfolgt ebenfalls über am Außenumfang angeordnete Nocken 10, die in die durch eine Anbindung 11 an dem vorderen Ende geschlossene Einschlitzung des Spreizelementes 2 eingreifen. Die Verdrehsicherung zwischen Spreizkörper 3 und Spreizelement 2 wird durch zwei am Außenumfang des Spreizkörpers 2 angeordneten Vorsprüngen 12 erreicht, die in zwei um 90 Grad zur Schlitzebene des Spreizelementes 2 versetzt angeordnete Ausnehmungen 13 in der Innenbohrung 14 des Spreizelementes 2 eingreifen. Durch die Begrenzung der Ausnehmungen 13 in Richtung Spreizhülse ergibt sich eine erst bei höherem Widerstand zu überwindende Einzugssperre. Damit wird sichergestellt, daß zunächst das Spreizelement 2 in die Spreizhülse 1 und erst danach der Spreizkörper 3 in das Spreizelement 2 eingezogen wird.

Durch das Ineinandergleiten von Spreizkörper 3, Spreizelement 2 und Spreizhülse 1 beim Eindrehen der Befestigungsschraube 4 in das vorgeformte Innengewinde 15 des Spreizkörpers 3 ergibt sich eine sehr starke Aufspreizung, die in porösen Baustoffen, wie Gasbeton und in Hohlkammersteinen durch entsprechende Ausbildung eines Gegenlagers zu hohen Haltewerten führt. Die Verspannung und Befestigung eines Gegenstandes 16 an einem solchen Mauerwerk 17 ergibt sich durch den Rand 18 des Dübels und dem in der Einsenkung des Randes zur Anlage kommenden Kopf 19 der Befestigungsschraube 4.

artur fischer forschung
7244 Tumlingen / Waldachtal 3

16. April 1982
Ju / Woe

- 1 -

EP 1459

Patentansprüche

1. Spreizdübel zur Verankerung in porösen Baustoffen, insbesondere in Gasbeton und Hohlkammersteinen, bestehend aus einer geschlitzten Spreizhülse und einem einen Spreizkonus aufweisenden Spreizkörper, der mittels einer Befestigungsschraube in axialer Richtung bewegbar ist, dadurch gekennzeichnet, daß zwischen dem Spreizkörper und dem vorderen Ende der Spreizhülse wenigstens ein hülsenförmiges, einen Spreizkonus aufweisendes Spreizelement angeordnet ist, das von seinem vorderen Ende ausgehend bis über einen Teil seiner Länge geschlitzt ist.

2. Spreizdübel nach Anspruch 1, dadurch gekennzeichnet, daß der Steigungswinkel des Spreizkonuses des Spreizelementes geringer ist als der Steigungswinkel des Spreizkonuses des Spreizkörpers.

3. Spreizdübel nach Anspruch 1, dadurch gekennzeichnet, daß die Spreizhülse um 90 Grad zu seiner Schlitzebene versetzt zwei sich gegenüberliegende längsverlaufende Innennuten aufweist, in die am Außenumfang des Spreizelementes angeordnete Nasen eingreifen.

0092661

EP 1459

4. Spreizdübel nach Anspruch 1, dadurch gekennzeichnet, daß das
   Spreizelement um 90 Grad zu seiner Schlitzebene versetzt zwei
   sich gegenüberliegende Ausnehmungen aufweist, in die am Außenumfang des Spreizkörpers angeordnete Vorsprünge eingreifen.

5. Spreizdübel nach Anspruch 1, dadurch gekennzeichnet, daß die
   durch die Schlitze getrennten Spreizschenkel der Spreizhülse
   und / oder des Spreizelementes durch eine Anbindung zusammengehalten sind.

1/1

Fig.1

Fig.2

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl. ³) |
|---|---|---|---|
| X | DE-A-1 750 492   (SPÖRR) * Figur 1 * | 1 | F 16 B   13/06 |
| X | DE-U-7 323 455   (FISCHER) * Figur 3 * | 1 | |
| Y | DE-U-7 800 232   (OEVERMANN) * Anspruch 3 * | 1 | |
| X | CH-A-   578 129   (UPAT MAX LANGENSIEPEN) * Figur 2 * | 1 | |
| X | FR-A-2 360 007   (MACHTLE) * Figur 2 * | 1 | |
| X | AU-A-   5 714   (COX) * Figur 6 * | 1,2 | RECHERCHIERTE SACHGEBIETE (Int. Cl. ³) |
| A | US-A-4 033 222   (WILSON) | | F 16 B   13/00 |

Der vorliegende Recherchenbericht wurde für alle Patentansprüche erstellt.

| Recherchenort BERLIN | Abschlußdatum der Recherche 15-07-1983 | Prüfer ZAPP E |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82